## Europäisches Patentamt
## European Patent Office
## Office européen des brevets

(11) Publication number: **0 112 891**
**B1**

(12) **EUROPEAN PATENT SPECIFICATION**

(45) Date of publication of patent specification: **26.03.86**

(21) Application number: **83902306.6**

(22) Date of filing: **29.06.83**

(86) International application number:
**PCT/SE83/00265**

(87) International publication number:
**WO 84/00318 02.02.84 Gazette 84/03**

(51) Int. Cl.⁴: **B 25 J 11/00, B 25 J 19/00,
F 16 P 3/00**

(54) **MATERIALS HANDLING ROBOT.**

(30) Priority: **09.07.82 SE 8204263**

(43) Date of publication of application:
**11.07.84 Bulletin 84/28**

(45) Publication of the grant of the patent:---
**26.03.86 Bulletin 86/13**

(84) Designated Contracting States:
**BE CH DE FR GB LI NL**

(56) References cited:

**Patent Abstracts of Japan, Abstract of JP
53-36869, publ. 1978-0504**

(73) Proprietor: **ALFA-LAVAL AB
Box 1721
S-221 01 Lund (SE)**

(72) Inventor: **EDSÖ, Lennart, Dick
Remmaregränd 3
S-222 51 Lund (SE)**

(74) Representative: **Widegren, Ake et al
AWAPATENT AB Box 5117
S-200 71 Malmö (SE)**

Courier Press, Leamington Spa, England.

## Description

The present invention relates to an automatically operating materials handling apparatus of the type stated in the preamble of claim 1.

In the manufacturing industry, use is made in many cases of automatically operating equipment, so-called industrial robots, for repeated monotonous work, but also for highly exact work and materials handling operations. In particular, robots of this type can be used with great success for careful handling of fragile or expensive materials. As is well known, these industrial robots bring the advantage that they can operate without intermission and are capable of performing repeated work operations always in exactly the same manner. It is frequently claimed that the industrial robot operates without interruptions which may occur in manual work operations and which are usually termed "the human factor". This may be true in and per se, but the fact remains that in an industrial process faulty work and materials handling operations preceding the operations to be carried out by the robot, or obstacles appearing in the operating range of the robot, may seriously interfere with the work of the robot.

The invention aims at providing an improved materials handling robot which operates quickly and efficiently and is so designed that the risk of damage to the robot through collision with objects which may turn up in the robot's path, or the risk of damage to such objects, is substantially eliminated. Such objects may be the material which the robot is intended to handle, or other objects or, for example, living creatures which, for some reason or other, stand in the robot's way during its operation.

To this end, the invention has been given the characteristic features stated in claim 1 and, for preferred embodiments, the characteristic features stated in claims 2—9.

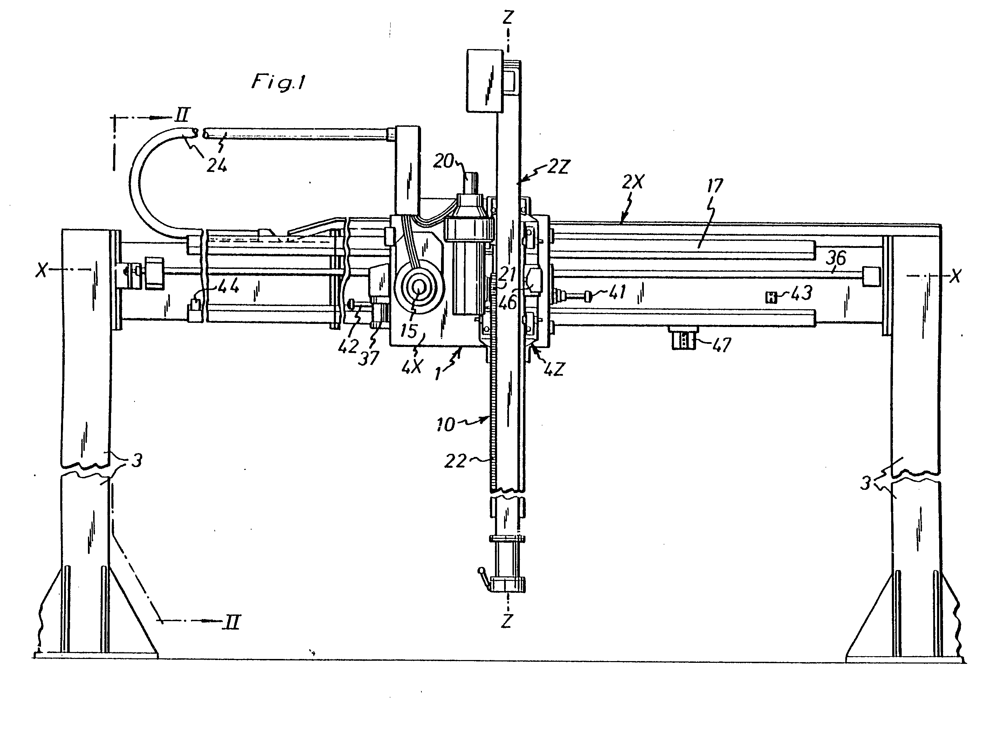

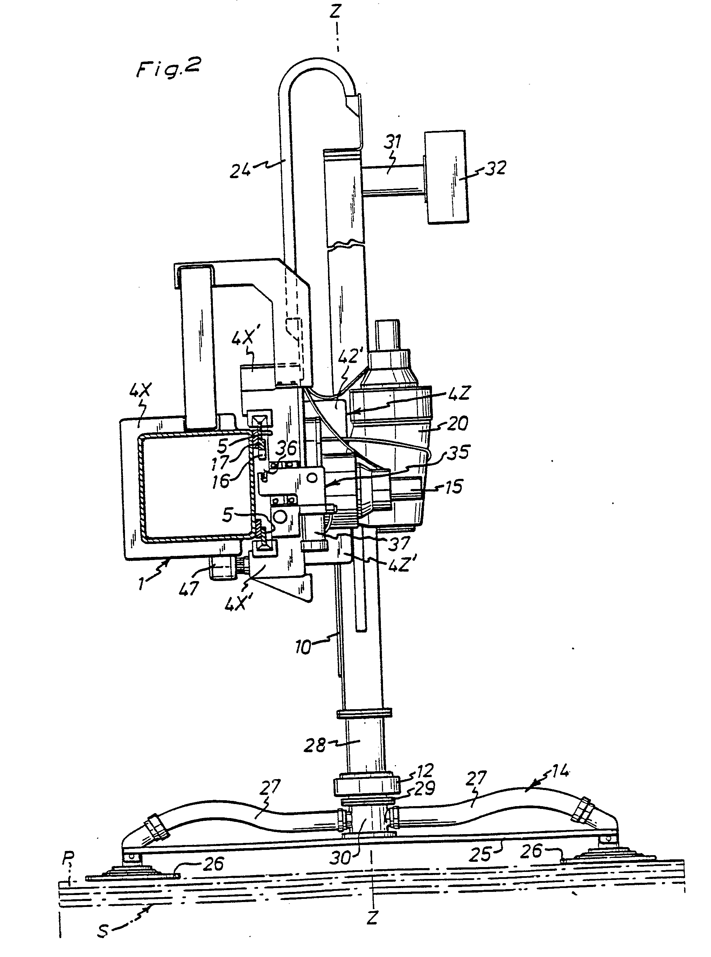

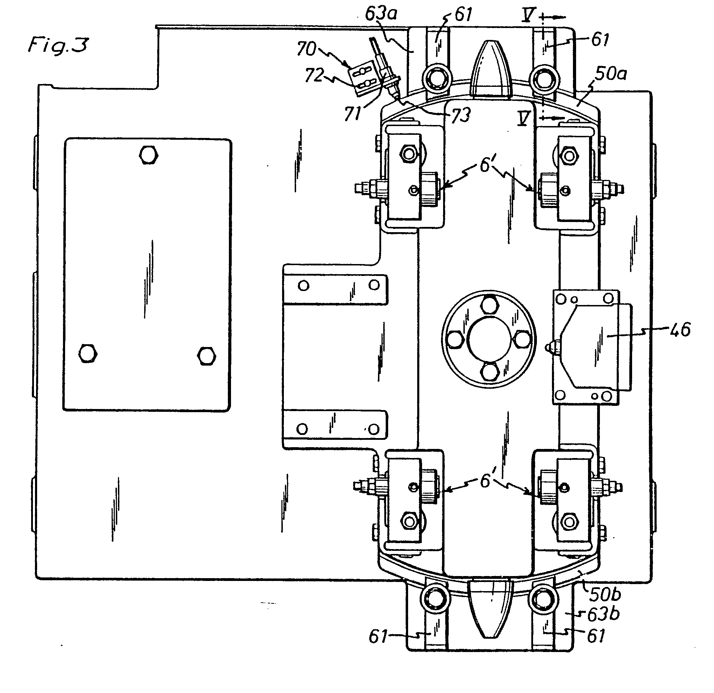

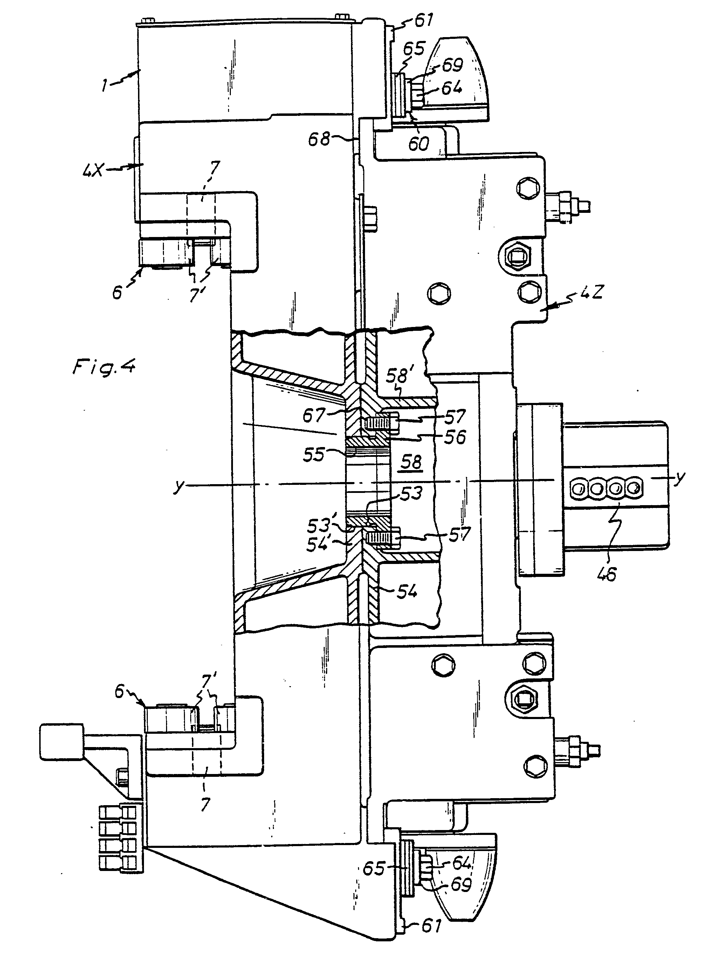

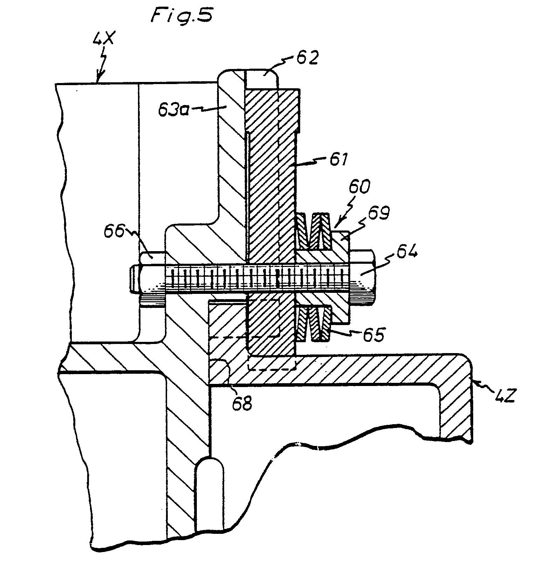

The invention will be described in more detail below, reference being had to the accompanying drawings in which Fig. 1 is a partly diagrammatic side view of a materials handling robot according to the invention which is mounted on a carriage movable on a horizontal axis, on a beam supported between two end frames; Fig. 2 is an end view, taken along line II—II of Fig. 1, of the load handling robot and the beam; Figs. 3 and 4 are respectively a side view and an end view of the carriage shown in Figs. 1 and 2, on a larger scale, the drive means having been removed to show details which otherwise would have been hidden; and Fig. 5 is a section on an even larger scale, taken along line V—V in Fig. 3.

The materials handling robot according to the invention and illustrated in Fig. 1 comprises a carriage generally designated 1 and supported for reciprocating movement along a horizontal beam 2X, in the following called X-beam, between two mutually alike end frames 3. According to the invention, the carriage 1 is composed, for the purpose described in detail below, of an X-chassis and a Z-chassis 4X and 4Z, respectively, which are detachably interconnected and rotatable relative to one another. In the embodiment illustrated, the X-chassis is a substantially parallel-epipedal housing which on its side facing the X-beam has a channel-shaped recess defined at its upper and lower ends by leg-shaped chassis portions 4X'. The X-beam is of sturdy box configuration and has on its side facing the X-chassis 4X two parallel support rails 5 mounted on the X-beam and forming guides with their longitudinal upper and lower, respectively, free edge portions for two pairs of roller assemblies 6, one of which is mounted on the upper leg 4X' of the X-chassis, while the other pair is mounted on the lower leg of the X-chassis, said lower leg also being designated 4X'. The upper guide roller assemblies each comprise an upper supporting roll 7 for cooperation with the upper edge of the upper guide 5, and two side supporting rolls 7' for support against opposite sides of the upper edge portion of the guide, the two lower guide roller assemblies being mirror-inverted in relation to the upper guide roller assemblies, i.e. they are provided with two side supporting rolls for support against the sides of the lower guide and a lower supporting roll for support against the downwardly facing edge of the guide. The Z-chassis 4Z of the carriage 1, which is connected to the X-chassis 4X, has at its side facing away from the X-chassis an outwardly open guide channel and carries, in the same manner as the X-chassis, on the legs defining the guide channel two pairs of roller assemblies 6' of essentially the same construction as the roller assemblies 6 previously described, although adapted to guide a vertical beam 2Z which, in contrast to the stationary X-beam, is movable, more particularly vertically movable. Like the X-beam, the Z-beam in the embodiment illustrated has two guides 10 for cooperation with the rolls of the roller assemblies 6'.

By means of driving devices which are described in detail below, the carriage 1 can be moved back and forth horizontally along the X-beam, and the Z-beam is movable vertically back and forth relative to the carriage 1. The vertical Z-beam 2Z has at its lower end a coupling device 12 which preferably is in the form of a quick coupling, for connection of a load handling device 14 which, in an embodiment chosen by way of example, is illustrated in Fig. 2, but not in Fig. 1. The load handling device 14 will be described in detail below in connection with a description of the mode of operation of said load handling device.

The driving device for moving the carriage 1 in the X-direction, i.e. horizontally, comprises in the embodiment illustrated an electric motor 15 mounted on the carriage and driving, via a gearing 16, a gear wheel 17 engaging a gear rack 18 mounted on the X-beam in parallel with and adjacent the upper guide 10.

Vertical movement of the Z-beam is accomplished similarly by means of an electric motor 20 which is mounted on the carriage and which, via a gearing, drives a gear wheel 21 engaging a gear rack 22 which is secured to one side of the Z-beam (see Fig. 2).

The power for operating the electric motor is supplied via flexible electric cables supported by protecting and flexible cable carriers 24, i.e. flexible cable guides controlling the cable loop formation. Electrically operated motors and transmissions with gear wheels and racks are preferred because these driving devices are exact, reliable and comparatively simple, but Origa motors or other pressure fluid-operated piston and cylinder units may be mentioned as examples of other driving devices. Thus, the invention is not bound to the type of driving motors and transmissions, and the above-mentioned driving devices therefore merely are shown by way of example.

As has already been apparent from the above, the carriage 1 and the Z-beam movable with said carriage form a transport means for moving the material along two perpendicular axes X—X and Z—Z, i.e. along the horizonal beam by moving the carriage 1, and in the vertical direction by moving the Z-beam for raising and lowering of the load handling means 14. If desired, the two perpendicular axes of movement X—X, Z—Z can be combined with a third perpendicular axis of movement which is perpendicular to the two beams. This can be accomplished in a simple manner by supporting the X-beam on a carriage movable by means of a driving device, for instance a carriage which is movable along rails suspended from the ceiling or supported on the floor. It should also be noted that the X-beam 2X could be positioned vertically, in which case the movable Z-beam will be a horizontal beam.

As has been described by way of introduction, the materials handling robot according to the invention is eminently suitable for careful handling and exact movement of fragile and/or expensive goods. In one case, for example, the goods may consist of thin sheets of fragile material, such as glass, or sheets of expensive material, such as titanium. Fig. 2 illustrates by way of example a stack S of metal sheets P which are to be moved from the stack to a pressing table (not shown). For gripping and lifting fragile sheets or relatively thin easy-bending metal sheets, the load handling device 14 preferably is a gripping device consisting of relatively light-weight frame 25 equipped with suction cups 26. The dimensions of the frame and the number of suction cups 26 depend upon the dimensions of the sheets. The suction cups 26 are connected via air hoses 27 to an air conduit within the vertical beam 2Z. A lower end portion 28 of the Z-beam preferably is in the form of a dismountable part with a built-in vacuum valve, the lower end of said part carrying the quick coupling 12 to which corresponds a similar coupling part 29 on an air distribution head 30 which is connected to the frame 25 and which, in its turn, is provided with distribution sockets connected with the hoses 27 (see Fig. 2).

For the evacuation of air and for generating a vacuum, the air conduit in the Z-beam is connected at its upper end via a pipe 31 to an air ejector 32 which, like the valve 28, is controlled via electronic means which usually comprise conventional activating and inactivating means, such as limit switches, proximity or touch contact switches, photocells or other means previously known in and per se in control technique.

During operation, the materials handling robot according to the present invention functions in accordance with a selected program with exact movements of the carriage 1 back and forth along the beam 2X and vertical movement of the beam 2Z. The movements usually are carried out in response to other materials handling operations on either or both sides of the operating range of the robot, and the movements should therefore be exact in respect of both time and distance. The carriage 1, the beam 2Z and all other equipment supported on the carriage may, together, have a considerable bulk, and rapid acceleration of this bulk requires relatively sturdy, rapidly reacting and exactly operating driving devices, preferred embodiments of which have been described, but it is of course also highly important that the movements will be stopped in exact positions.

For braking the carriage in the X direction, use is preferably made of an electrically operated or pressure fluid-operated braking device which in Fig. 2 is generally designated 35. The brake preferably is of the disc brake type where the brake disc has been replaced by a braking rail 36 secured to the X-beam between the guides and parallel thereto. The braking rail which extends into the gap (see Fig. 2) between two brake shoes (not shown) provided with brake linings, preferably consists of a steel band having sufficient flexibility to be self-adaptive in the brake gap. For clamping the brake shoes against the brake band, use is made, in a preferred embodiment of the invention, a double-acting brake cylinder 37, preferably a compressed air-operated cylinder which is controlled by sensing means, such as limit switches, pressure switches, photocells etc, via a valve means, such as a solenoid-operated valve.

It should be noted, however, that the type of braking or stopping device should be selected with due regard to the type of driving means used for moving the carriage in relation to the X-beam and for moving the Z-beam in relation to the carriage.

The parts of the robot which are movable relative to one another preferably are equipped with shock-absorbing means serving to ensure a gentle stop in selected positions. In view hereof, the carriage is provided with shock-absorbers 41, 42 on either side for cooperation with stop means 43, 44 detachably mounted on the X-beam and forming limit stops. The shock-absorbers 41, 42 may be hydraulic shock-absorbers that may be combined with resilient buffers.

Alternatively, the shock-absorbers are supported by the X-beam for cooperation with abutments on the carriage, and in special embodiments the shock-absorbers or the abutments may be provided retractable into the carriage or the beam, in which case the carriage can be allowed to pass freely between the end positions or can be stopped in one or several intermediate positions by causing the selected stop means or shock-absorber to be extended so that these cannot pass each other. In combination with limit switches disposed in the same or an equivalent manner retractile and protractile shock-absorbers or abutments and braking and driving devices, grippers etc. can be controlled automatically according to selected motional and operational programs.

A supporting device for four limit switches disposed in a vertical row on the X-beam is shown by way of example at 46, said supporting device being adapted to cooperate with release means 47 on the carriage, or vice versa. By means of a suitable number of limit switches and movable or otherwise settable release means therefor, operation of the carriage in the X-direction and of the Z-beam in the Z-direction can be controlled to fetch and deliver material by means of the gripping means 14 and for stopping the carriage and/or the Z-beam in any preselected position, for instance at stand-by pending the termination of the working operations of other units upon coordinated operation of several operating units of the same or different types, at stand-by pending the correct time for delivering sheet metal to a sheet metal press, or many other constantly repeated operating cycles. The operating program can be changed for instance by inserting or removing release means for limit switches in or from a number of sockets arranged in appropriate series on the beams for pulsing drive motors, brake cylinders, operating cylinders etc.

As has already been mentioned, a materials handling robot of the type here concerned has a relatively high inertia and may be damaged if it collides with a stationary obstacle in its path, or may damage the obstacle. As will appear from Figs. 1 and 2, the Z-beam 2Z or the gripping means 14 runs the greatest risk of colliding with an obstacle that may have entered the operating range of the robot. To eliminate the risk of a collision between the Z-beam and such an obstacle, the floor on either or both sides of the X-beam can be demarcated by means of an electronic monitoring device which automatically stops the movement of the carriage 1 by transmitting a signal to drive and stop means. Although the provision of such a monitoring device, for instance a photocell system, can prevent accidents by interrupting the operation, unexpected incidents in a manufacturing plant may occur very suddenly and result in the appearance of an obstacle in the path of the robot, especially the Z-beam pointing downwardly from the carriage, including the gripping means. For greater security from serious damage in such an event, the robot according to the present invention is so designed that the Z-beam can be swung backwards on impact against an obstacle.

To this end, the Z-chassis of the carriage is pivotally supported on the X-chassis for pivotal movement about an axis of pivotment Y—Y which is perpendicular both to the axis X—X and the axis Z—Z.

The Z-chassis 2Z has at its upper and lower ends a circularly curved surface formed by, for instance, a circularly curved flange 50a, 50b. These circularly curved flanges 50a, 50b are arranged concentrically on either side of the axis of pivotment Y—Y.

The axis of pivotment Y—Y forms the centre axis for a circular hole 53 in the wall 54 of the Z-chassis facing the X-chassis. A tubular journal 55 which is provided with a flange 56 at one end, is fixed in the hole 53 in that the flange 56 is connected, via screw bolts 57, with the wall 54 of the Z-chassis facing the X-chassis at the side facing away from the X-chassis. The journal 55 whose longitudinal axis coincides with the axis of pivotment Y—Y, projects through the hole 53 into a corresponding hole 53' in the wall 54' of the X-chassis. The tubular journal 55 and the hole 53' in the wall 54' have been worked to present mating bearing surfaces. The journal 55 is mounted in position through an open circular cavity 58 provided in the Z-chassis and surrounded by a cylindrical wall 58'.

To prevent pendulum movement or tilting of the displaceable Z-beam, the Z-chassis is rotatable relative to the X-chassis only against the action of a frictional force, and normally the Z-chassis is held in its adjusted axial and angular positions relative to the X-chassis by clamping means generally designated 60 and comprising, in the preferred embodiment illustrated, four clamps 61 connected with the X-chassis. Two of these clamps engage the upper circularly curved flange 50a of the Z-chassis, while the other two clamps engage the lower circularly curved flange 50b of the Z-chassis. The clamps 61 are guided in vertical guide grooves 62 in upper and lower parts 63a, 63b of the X-chassis wall 54', said upper and lower parts serving as supporting means for the Z-chassis, and the clamps are connected with said supporting means 63a, 63b by means of bolts 64 and are resiliently clamped into engagement with the guide flanges 50a, 50b by means of a set of cup-shaped spring washers 65 provided one on each bolt 64 and biassed thereon by means of nuts 66 on said bolts.

The force with which the clamps engage the guide flanges 50a, 50b is determined by the extent to which the spring washers 65 are compressed by the nuts 66. In the clamped position of the Z-chassis, the two chassis engage one another preferably by means of relatively restricted planar supporting surfaces, as is illustrated by the area 67 around the journal 55 and by the area 68 bordering on the circularly curved flanges 50a, 50b. For rotating the Z-chassis about the geometrical axis Y—Y, the Z-beam must be subjected to a force imparting to the Z-chassis a torque which is sufficient to surmount the frictional force between the clamps 61 and the flanges 50a, 50b as well as the frictional force between the contact surfaces 67, 68 of the two chassis. The magnitude of the total frictional force depends upon the extent to which the nuts 66 are tightened. If the Z-beam, during movement of the carriage 1 along the X-beam, collides with a stationary obstacle with such a force that damage could arise, the Z-beam shall be swung aside by rotation of the Z-chassis relative to the X-chassis. The spring bias exerted by the nuts 66 should therefore be so chosen that the Z-chassis is held stationary in the adjusted angular position relative to the X-chassis for all normal types of load that may occur during operation of the materials handling robot, plus a reasonable allowance for reasonable troublefree operation. For this purpose, calibrated spacer sleeves 69 on the bolts 64 may be used (Fig. 5).

The explanation why the clamps 61, of the clamping device engage circularly curved elements, such as the flanges 50a, 50b, is on the one hand that rotational movement of the Z-chassis is to be prevented only by frictional force, not by mechanical obstacles, and on the other hand that it shall be possible to swing the Z-chassis without jeopardizing the retention force in the direction of the axis Y—Y.

Swinging movement of the Z-beam caused by collision with an object, and the resulting rotation of the Z-chassis, shall preferably release a pulse for stopping the driving motor of the carriage and for engaging the braking device described. At the same time, the personnel should be warned of what has happened by releasing an alarm signal so that the personnel can quickly clear away the cause of the obstruction and restart operation.

To this end, the carriage 1 is equipped with a detector generally designated 70 and comprising, in the embodiment illustrated, a press switch 71 which is adjustably mounted on the wall 54' of the X-chassis by means of a holder 72 and engages a piston 73 in a recess or a groove in either one of the guide flanges 50a, 50b, for instance the upper guide flange 50a (see Fig. 3). A stop and alarm pulse is emitted when the piston 73 is displaced by either one of the side faces of the groove.

The detector described can be enlarged in a simple manner by two or more switches to preclude the risk that no stop and alarm pulse is transmitted. If several detectors (switches) are used, they may serve to sense and respond to swinging movements of the Z-chassis relative to the X-chassis of different sizes. For example, a press switch 71 may cooperate with the upper flange 50a, and a second press switch may cooperate with the lower flange 50b, one of said press switches being adapted to release a stop or alarm pulse when a torque occurring on the Z-chassis exceeds a given value and no actual swinging movement has time to develop. Such an arrangement may be used to prevent bodily injury in case the Z-beam or the gripping means should strike a person who happens to stand in the way of the load handling robot and is caught between the robot and an object. If desired, the safety means as described above may also be so arranged that the driving motor of the carriage 1 obtains an order pulse for reversed direction of movement in the event the Z-beam or its gripping means strikes an object. In an arrangement of the last-mentioned type, the carriage can be moved back to the turning point and then again moved in the direction in which the obstacle was struck, the carriage being stopped if the obstacle is still there. In some cases, the risks involved in controlling the movement of the carriage 1 in this manner may be accepted in reliance on the fact that the safety means described guarantees that the Z-beam is safely swung aside in the event of an inadmissibly powerful impact against an obstacle.

It should be noted that the embodiment of the detector 70 as described above can be modified in many different ways for sensing the swinging movement of the Z-beam by the turning movement of the Z-chassis, or for sensing the extent of the torque on the Z-chassis relative to the X-chassis. Thus, it is possible to use several known solutions and arrangements in control engineering, which provide for a mode of operation equivalent to the one described above, but pulse generators of the electric type are preferred in that they can be included in a simple manner in electric control circuits for compreshensive control of the switches, relays, servo motors or valves employed for the driving and stopping means of the materials handling robot.

The preferred embodiment described above of the materials handling robot can be modified in accordance with what has been said above, and in several other ways which will be self-evident to the expert who has access to the above description. For instance, the X-beam may be replaced by any suitable conveyor path whatsover for the movement of the carriage in the X—X direction, and instead of the Z-beam illustrated, it is possible to use a boom, arm or other member which is movable in the Z—Z direction. It should be noted that the X—X direction need not be horizontal, nor absolutely straight. Thus, it is extremely simple to let the carriage travel along a curved path, if this is required.

**Claims**

1. A materials handling robot comprising a carriage (1) which is movable along a first path of movement (X—X) and carries a materials handling device (2Z, 14) movable relative to the carriage, in a second path of movement (Z—Z) forming an angle, usually a right angle, with the first path of movement (X—X) characterized in that the carriage (1) comprises a first and a second part (4X and 4Z, respectively) of which the first part (4X) carries driving and guiding means (6, 15, 16) for moving the carriage with the materials handling device (2Z, 14) along said first path of movement (X—X), and braking and stop means (35, 41, 42), while the second part (4Z) carries driving and guiding means (6', 20, 21) for moving the materials handling device (2Z, 14) along said second path of movement (Z—Z), and is connected to the first carriage part (4X) by means of an articulation (53', 55) and a clamping device (60) which are so arranged that the second carriage part (4Z) is rotatable relative to said first carriage part (4X) about a geometrical axis (Y—Y) perpendicular to the instantaneous direction of movement of the carriage along said first path of movement (X—X), only by overcoming a frictional force set with the clamping device, and produced by a torque exerted on the materials handling device (2Z, 14) about the said geometrical axis (Y—Y) and exceeding the frictional force set by the clamping device (60), whereby the materials handling device (2Z, 14) can be swung aside in the event of an obstacle occurring in its path of movement when it is moved by means of said carriage in said first direction of movement (X—X).

2. A robot as claimed in claim 1, characterized in that the clamping device (60) comprises at least one guiding and frictional surface (50a, 50b) which is carried by said first or second carriage part and which is coaxial with the geometrical axis (Y—Y) for turning the second carriage part relative to the first carriage part, and a clamping mechanism (61) carried by said second or first carriage part and capable of being clamped against said surface by an adjustable force.

3. A robot as claimed in claim 2, characterized in that the clamping mechanism (61) can be clamped with an adjustable force via a spring mechanism (65) and a clamping force adapter (69).

4. A robot as claimed in any one of the preceding claims, characterized in that the second carriage part (4Z) is detachable from the first carriage part (4X) by being withdrawn along said geometrical axis (Y—Y) after releasing the clamping mechanism (61) from its engagement with the said circularly curved guiding and frictional surface or surfaces (50a, 50b), and that said surface or said surfaces (50a, 50b) have a curvature of sufficient length to maintain the engagement with the clamping mechanism, while maximally swinging the materials handling device (2Z, 14), thereby to prevent unintentional separation of the two carriage parts from one another.

5. A robot as claimed in any one of the preceding claims, characterised by means (70) carried on said carriage (1) and adapted to detect rotational movement of the second carriage part (4Z) relative to the first carriage part (4X) and for producing a signal when rotational movement occurs.

6. A robot as claimed in claim 5, characterized in that the driving means (15) and the braking means (35) for the carriage movement along the first path of movement (X—X) are adapted to be deactivated and to be activated, respectively, by means of a signal from said detecting means (70).

7. A robot as claimed in any one of the preceding claims, characterised by cooperating limit switches and release means therefor on the carriage (1) and along said paths of movement (Z—Z, X—X) for actuating said braking means (35) and driving means (15, 20), and for actuating stop and shock-absorbing means (41—44) supported by the carriage and along said paths of movement (X—X, Z—Z).

8. A robot as claimed in any one of the preceding claims, wherein said first path of movement (X—X) is in the form of a horizontal first beam (2X), and said second path of movement (Z—Z) is perpendicular relative to said first path of movement and preferably vertical, characterized in that said first carriage part (4X) of the carriage (1) forms a trolley with wheel frames (6) for moving the carriage along guides (5) on the beam (2X), while the other carriage part (4Z) detachably and rotatably connected with said first carriage part forms a drive and guide unit for said second beam (2Z); that the second beam (2Z) is longitudinally displaceably operated by a drive motor (20) and guided by guide wheels (6') on the second carriage part (4Z); that the second beam (2Z) at its lower end via a coupling means (12) carries a gripping device (14) and forms, together with said gripping device and said second carriage part with the drive motor (20) thereon, a unit which is pivotal about said geometrical axis (Y—Y) in a vertical plane parallel to and located on one side of said first beam (2X); that said unit, actuated by a torque overcoming the said frictional resistance, is freely pivotal and in said vertical plane as a substantially rigid pendulum within a predetermined angle of pivotment, without any part of said unit within this angle of pivotment contacting said first beam (2X); and that the curve length of said circularly curved guide and frictional surface or surfaces (50a, 50b) at least is sufficient for said angle of pivotment.

9. A robot as claimed in any one of claims 2—8, characterized in that the second carriage part (4Z) has two circularly curved guide and frictionial surfaces (50a, 50b) diametrically positioned on either side of said geometrical axis (Y—Y) and cooperating each with one clamping means (61) supported by said first carriage part (4X), and in that said first and second carriage parts have opposing planar surfaces of engagement (67, 68) which are held clamped against one another by the engagement of said clamping means (61) with said circularly curved guide and frictional surfaces (50a, 50b), thereby intensifying the frictional engagement between said carriage parts (4X, 4Z).

**Patentansprüche**

1. Roboter zur Handhabung von Materialien, bestehend aus einem Wagen (1), der längs einer ersten Bewegungsbahn (X—X) bewegbar ist und eine Materialhandhabungseinrichtung (2Z, 14) trägt, die im Verhältnis zum Wagen in einer zweiten Bewegungsbahn (Z—Z) bewegbar ist, welche mit der ersten Bewegungsbahn (X—X) einen Winkel bildet, üblicherweise einen rechten Winkel, dadurch gekennzeichnet, dass der Wagen (1) einen ersten und einen zweiten Teil (4X bzw. 4Z) umfasst, von denen der erste Teil (4X) Antriebs- und Führungsmittel (6, 15, 16) zur Bewegung des Wagens mit der Materialhandhabungseinrichtung (2Z, 14) längs der genannten ersten Bewegungsbahn (X—X) trägt, sowie Brems- und Anhaltemittel (35, 41, 42), während der zweite Teil (4Z) Antriebs- und Führungsmittel (6', 20, 21) zur Bewegung der Materialhandhabungseinrichtung (2Z, 14) längs der genannten zweiten Bewegungsbahn (Z—Z) trägt und an den ersten Wagenteil (4X) mittels einer Gelenkvorrichtung (53', 55) und einer Spanvorrichtung (60) verbunden ist, die derart eingerichtet sind, dass der zweite Wagenteil (4Z) nur unter Ueberwindung einer mittels der Spannvorrichtung eingestellten Reibungskraft im Verhältnis zum ersten Wagenteil (4X) um eine geometrische, zur momentanen Bewegungsrichtung des Wagens längs der genannten ersten Bewegungsbahn (X—X) senkrechte Achse (Y—Y) mittels eines auf die Materialhandhabungseinrichtung (2Z, 14) um die genannte geometrische Achse (Y—Y) ausgeübten Drehmoments drehbar ist, welches die mittels der Spannvorrichtung (60) eingestellte Reibungskraft übersteigt, wodurch die Materialhandhabungsvorrichtung (2Z, 14) beim Auftreten eines Hindernisses in ihrer Bewegungsbahn, wenn die Materialhandhabungsvorrichtung mittels des Wagens in der genannten ersten Bewegungsrichtung (X—X) bewegt wird, zur Seite geschwenkt werden kann.

2. Roboter nach Anspruch 1, dadurch gekennzeichnet, dass die Spannvorrichtung (60) zumindest eine vom ersten oder zweiten Wagenteil getragene, Führungs- und Reibungsfläche (50a, 50b) umfasst, die mit der geometrischen Achse (Y—Y) zum Drehen des zweiten Wagenteils im Verhältnis zum ersten Wagenteil koaxial ist, sowie einen vom zweiten oder ersten Wagenteil getragenen Spannmechanismus (61), der mittels einer stellbaren Kraft gegen die genannte Fläche festspannbar ist.

3. Roboter nach Anspruch 2, dadurch gekennzeichnet, dass der Spannmechanismus (61) mittels einer stellbaren Kraft über einen Federmechanismus (65) und einen Klemmkraftadapter (69) festspannbar ist.

4. Roboter nach einem der vorhergehenden Ansprüche, dadurch gekennzeichnet, dass der zweite Wagenteil (4Z) vom ersten Wagenteil (4X) lösbar ist, indem er nach Freigabe des Eingriffs des Spannmechanismus (61) mit der kreisbogenförmigen Führungs- und Reibungsfläche oder -flächen (50a, 50b) längs der genannten geometrischen Achse (Y—Y) ausgezogen wird, und dass diese Fläche oder Flächen (50a, 50b) eine genügend grosse Bogenlänge haben, um bei maximaler Ausschwenkung der Materialhandhabungsvorrichtung (2Z, 14) den Eingriff mit det Spannvorrichtung aufrechtzuerhalten, so dass hierdurch eine unbeabsichtigte Trennung der beiden Wagenteile voneinander verhindert wird.

5. Roboter nach einem der vorhergehenden Ansprüche, gekennzeichnet durch eine vom Wagen (1) getragene Einrichtung (70) zum Ermitteln einer Drehbewegung des zweiten Wagenteils (4Z) im Verhältnis zum ersten Wagenteil (4X) und zur Abgabe eines Signals im Falle einer solchen Drehbewegung.

6. Roboter nach Anspruch 5, dadurch gekennzeichnet, dass die Antriebsmittel (15) und die Bremsmittel (35) für die Wagenbewegung längs der erstgenannten Bewegungsbahn (X—X) mittels eines Signals von der genannten Ermittlungseinrichtung (70) abgeschaltet bzw. eingeschaltet werden.

7. Roboter nach einem der vorhergehenden Ansprüche, gekennzeichnet durch miteinander zusammen wirkende, auf dem Wagen (1) und längs der genannten Bewegungsbahnen (Z—Z, X—X) vorgesehene Endschalter und Auslösemittel für diese zur Betätigung der Bremsmittel (35) und Antriebsmittel (15, 20), sowie zur Betätigung von auf dem Wagen und längs der genannten Bewegungsbahnen (X—X, Z—Z) vorgesehenen Anhalte- und Stossdämpfmitteln.

8. Roboter nach einem der vorhergehenden Ansprüche, bei dem die erste Bewegungsbahn (X—X) von einem horizontalen ersten Träger (2X) gebildet ist, und die zweite Bewegungsbahn (Z—Z) zur genannten ersten Bewegungsbahn senkrecht und vorzugsweise vertikal ist, dadurch gekennzeichnet, dass der genannte erste Wagenteil (4X) des Wagens (1) einen Laufwagen mit Radgestellen (6) zur Bewegung des Wagens längs auf dem Träger (2X) vorgesehener Führungen (5) bildet, während der mit dem ersten Wagenteil lösbar und drehbar verbundene zweite Wagenteil (4Z) eine Antriebs- und Führungseinheit für einen zweiten Träger (2Z) bildet; dass der zweite Träger (2Z) in seiner Längsrichtung mittels eines Antriebsmotors (20) verschiebbar. und mittels Lenkräder (6') auf dem zweiten Wagenteil (4Z) bewegbar ist; dass der zweite Träger (2Z) an seinem unteren Ende über eine Kupplung (12) eine Greifvorrichtung (14) trägt und zusammen mit dieser Greifvorrichtung und dem zweiten Wagenteil mit dem von diesem getragenen Antriebsmotor (20) eine Einheit bildet, die um die genannte geometrische Achse (Y—Y) in einer zum ersten Träger (2X) parallen und auf dessen einer Seite gelegenen Vertikalebene schwenkbar ist; dass die genannte Einheit unter der Wirkung eines den genannten Reibungswiderstand überwindenden Schwingungsmoments in der genannten Vertikalebene als ein im wesentlichen starres Pendel innerhalb eines gewissen Schwingungswinkels frei schwenkbar ist, ohne dass ein Teil der Einheit innerhalb dieses Schwingungswinkels den ersten Träger (2X) berührt; und dass die Bogenlänge der genannten kreisbogenförmigen Führungs- und Reibungsfläche oder -flächen (50a, 50b) für diesen Schwingungswinkel zumindest genügend ist.

9. Roboter nach einem der Ansprüche 2—8, dadurch gekennzeichnet, dass der zweite Wagenteil (4Z) zwei kreisbogenförmige Führungs- und Reibungsflächen (50a, 50b) aufweis, die diametral beiderseits der genannten geometrischen Achse (Y—Y) liegen und mit je einer Spannvorrichtung (61) zusammenwirken, die vom ersten Wagenteil (4X) getragen ist, und dass die genannten ersten und zweiten Wagenteile einander zugewandte, ebene Anliegeflächen (67, 68) aufweisen, die durch den Eingriff der Spannvorrichtungen (61) mit den kreisbogenförmigen Fürungs- und Reibungsflächen (50a, 50b) gegeneinander festgeklemmt gehalten werden und den Reibungseingriff zwischen der Wagenteilen (4X, 4Z) verstärken.

**Revendications**

1. Robot manipulateur de matières, comprenant un chariot (1) qui est déplaçable le long d'un premier parcours (X—X) et porte un dispositif manipulateur de matières (2Z, 14), déplaçable par rapport au chariot sur un second parcours (Z—Z) formant un angle, habituellement un angle droit, avec le premier parcours (X—X), caractérisé en ce que le chariot (1) comporte une première (4X) et une seconde partie (4Z), la première partie (4X) portant des moyens d'entraînement et de guidage (6, 15, 16) pour déplacer le chariot avec le dispositif manipulateur de matières (2Z, 14) le long du premier parcours (X—X), ainsi que des moyens de freinage et d'arrêt (35, 41, 42), tandis que la seconde partie (4Z) porte des moyens d'entraînement et de guidage (6', 20, 21) pour déplacer le dispositif manipulateur de matières (2Z, 14) le long du second parcours (Z—Z) et est reliée à la première partie (4X) du chariot par une articulation (53', 55) et un dispositif de serrage (60) qui sont agencés de manière que la seconde partie (4Z) du chariot puisse tourner autour d'un axe géométrique (Y—Y) perpendiculaire à la direction de mouvement instantanée du chariot le long du premier parcours (X—X), mais seulement en surmontant une force de frottement créé par le dispositif de serrage et sous l'effet d'un couple exercé sur le dispositif manipulateur de matières (2Z, 14) autour dudit axe géométrique (Y—Y) et dépassant la force de frottement créée par le dispositif de serrage (60), de manière que le dispositif manipulateur de matières (2Z, 14) puisse être écarté par son oscillation au cas où un obstacle se présente sur son parcours pendant qu'il est déplacé par le chariot dans la première direction de mouvement (X—X).

2. Robot selon la revendication (1), caractérisé en ce que le dispositif de serrage (60) comporte au moins une surface de guidage et de friction (50a, 50b) qui est portée par la première ou la seconde partie du chariot et est coaxiale à l'axe géométrique (Y—Y) pour la rotation de la seconde partie du chariot par rapport à la première partie du chariot, ainsi qu'on mécanisme de serrage (61) porté par la seconde ou la première partie du chariot et capable d'être serré contre ladite surface par une force réglable.

3. Robot selon la revendication 2, caractérisé en ce que le mécanisme de serrage (61) peut être serré avec une force réglable par l'intermédiaire d'un mécanisme à ressort (65) et d'un adaptateur de force de serrage (69).

4. Robot selon l'une quelconque des revendications précédentes, caractérisé en ce que la seconde partie (4Z) du chariot peut être détachée de la première partie (4X) du chariot par son enlèvement le long dudit axe géométrique (Y—Y) après que le mécanisme de serrage (61) a été libéré de son emprise sur la surface ou les surfaces de guidage et de friction de courbure circulaire (50a, 50b) et que cette surface ou ces surfaces (50a, 50b) possèdent une courbure de longueur suffisante pour maintenir l'emprise du mécanisme de serrage pendant l'oscillation maximale du dispositif manipulateur de matières (2Z, 14), afin d'empêcher ainsi la séparation involontaire des deux parties du chariot l'une de l'autre.

5. Robot selon l'une quelconque des revendications précédentes, caractérisé par un moyen (70) porté sur le chariot (1) et adapté pour détecter un mouvement de rotation de la seconde partie (4Z) de chariot par rapport à la première partie (4X) du chariot et pour produire un signal lorsqu'un tel mouvement rotatif se produit.

6. Robot selon la revendication 5, caractérisé en ce que le moyen d'entraînement (15) et le moyen de freinage (35) pour le mouvement du chariot le long du premier parcours (X—X) sont adaptés pour être rendus inopérants et pour être rendus opérants par un signal fourni par le moyen de détection (70).

7. Robot selon l'une quelconque des revendications précédentes, caractérisé par des interrupteurs de fin de course coopérants et des moyens de déclenchement pour ceux-ci, prévus sur le chariot (1) et le long des parcours (Z—Z, X—X), pour actionner le moyen de freinage (35) et les moyens d'entraînement (15, 20), ainsi que pour actionner des moyens d'arrêt et d'absorption de chocs (41—44) supportés par le chariot et le long desdits parcours (X—X, Z—Z).

8. Robot selon l'une quelconque des revendications précédentes, dans lequel le premier parcours (X—X) est défini par une première poutre horizontale (2X) et dans lequel le second parcours (Z—Z) est perpendiculaire au premier parcours et est de préférence vertical, caractérisé en ce que le première partie (4X) du chariot (1) forme un châssis mobile avec des porte-galets (6) pour déplacer le chariot le long de guides (5) sur la poutre (2X), tandis que l'autre partie (4Z) du chariot, qui est reliée détachable et rotative à la première partie du chariot, forme une unité d'entraînement et de guidage pour la seconde poutre (2Z); que la seconde poutre (2Z) est déplaçable longitudinalement par un moteur d'entraînement (20) en étant guidée par des galets de guidage (6') sur la seconde partie (4Z) du chariot, que la seconde poutre (2Z) porte à son extrémité inférieure, par l'intermédiaire d'un moyen d'accouplement (12), un dispositif de préhension (14) et forme, avec ce dispositif de préhension et la seconde partie du chariot, portant le moteur d'entraînement (20), une unité qui peut osciller autour dudit axe géométrique (Y—Y) dans un plan vertical parallèle à et situé d'un côté de la première poutre (2X); que cette unité, sous l'effet d'un couple surmontant ladite résistance par frottement, peut osciller librement dans ce plan vertical à la façon d'un pendule essentiellement rigide et dans les limites d'un angle d'oscillation prédéterminé, sans qu'une quelconque partie de cette unité vienne en contact avec le première poutre (2X) dans les limites de cet angle d'oscillation; et que la longueur de courbe de la surface ou des surfaces de guidage et de friction (50a, 50b) en courbe circulaire est au moins suffisante pour cet angle d'oscillation.

9. Robot selon l'une quelconque des revendications 2 à 8, caractérisé en ce que la seconde partie (4Z) de chariot possède deux surfaces de guidage et de friction (50a, 50b) à courure circulaire, qui sont diamétralement opposées de part et d'autre dudit axe géométrique (Y—Y) et qui coopèrant chacune avec un dispositif de serrage (61) supporté par le première partie (4X) du chariot, et en ce que le première et la seconde partie du chariot possèdent des surfaces de contact opposées planes (67, 68) qui sont maintenues serrées l'une contre l'autre par l'emprise du dispositif de serrage (61) sur le surfaces de guidage et de friction à courbure circulaire (50a, 50b), intensifiant ainsi le contact de frottement entre les parties (4X, 4Z) du chariot.

Fig.1

Fig.2

Fig.3

Fig.4

Fig.5